# EUROPÄISCHE PATENTSCHRIFT

(11) **EP 1 854 620 B1**
(45) Veröffentlichungstag und Bekanntmachung des Hinweises auf die Patenterteilung: **09.02.2011**
(21) Anmeldenummer: 07107439.7
(22) Anmeldetag: 03.05.2007
(51) Int. Cl.: B29C 67/20, C04B 16/08, C08J 9/35, C08J 9/236, E04C 1/41

(54) **Verfahren zum Verfüllen von Hohlräumen mit Schaumstoffpartikeln**
Method for filling cavities with foam particles
Procédé destiné au remplissage de zones creuses avec des particules de mousse

(30) Priorität: 09.05.2006 EP 06113682
(43) Veröffentlichungstag der Anmeldung: 14.11.2007
(73) Patentinhaber: BASF SE, 67056 Ludwigshafen (DE)
(72) Erfinder: Schmidt, Marco, 67346, Speyer (DE); Auenmüller, Jürgen von, 68794, Oberhausen-Rheinhausen (DE); Centner, Alexander, 67127, Rödersheim-Gronau (DE)

(56) Entgegenhaltungen:
- EP-A- 0 086 974
- DE-A1- 3 006 008
- US-A- 3 913 298

## Beschreibung

Die Erfindung betrifft ein Verfahren zum Verfüllen von Hohlräumen mit Schaumstoffpartikeln sowie danach erhältliche Bauelemente.

Zur Wärmedämmung im Bauwesen werden häufig Schaumstoffplatten aus expandierbarem Polystyrol eingesetzt. Diese können sowohl auf der Innen- als auch Außenwand als Wärmedämm-Verbundsystem aufgebracht werden.

Für eine wirtschaftliche Bauweise werden auch spezielle Hohlblock-Bausteine eingesetzt, deren Kammern mit vorgeschäumten Schaumstoffpartikeln verfüllt und anschließend mit Dampf punktförmig verschweißt werden.

Die EP-A 1 634 911 beschreibt die Verwendung von Polymerschaumpartikeln und Polymerbindemitteln zur Herstellung von Bodenausgleichsschüttungen.

DE 3006008 A lehrt Hohlblocksteine, deren Hohlräume mit teilchenförmigen isolierungsmaterialien und einem Bindemittel gefüllt sind.

Aufgabe der vorliegenden Erfindung war es, ein einfaches und kostengünstiges Verfahren zur Befüllung von Hohlräumen mit Schaumstoffpartikeln zu finden.

Dem gemäß wurde ein Verfahren zum Verfüllen von Hohlräume von Hohlblocksteinen mit Schaumstoffpartikeln gefunden, welches die Stufen
a) Benetzen der Schaumstoffpartikel mit Wasser, einer wässrigen Lösung oder wässrigen Dispersion,
b) Befüllen des Hohlraumes mit den benetzten Schaumstoffpartikeln,
c) Koagulieren einer wässrigen Polymerdispersion durch Ansprüchen einer wässrigen Lösung eines Koagulationsmittels in dem mit Schaumstoffpartikeln befüllten Hohlraum,
umfasst.

Als Schaumstoffpartikel können Polymerschaumpartikel aus thermoplastischen Polymeren verwendet werden.

Bevorzugt werden als Polymerschaumpartikel vorgeschäumte, expandierbare Styrolpolymere (EPS) oder Polyolefinschaumpartikel, wie expandiertes Polypropylen (EPP) eingesetzt. Die Polymerschaumpartikel weisen in der Regel einen mittleren Partikeldurchmesser im Bereich von 2 bis 10 mm und eine Schüttdichte im Bereich von 5 bis 20 g/l, bevorzugt im Bereich von 8 bis 16 g/l auf.

Polymerschaumpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck-oder kontinuierlichen Vorschäumer können hierbei Endschüttdichten unter 10 g/l erhalten werden.

Legt man Wert auf eine besonders gute Schalldämmung, so verwendet man möglichst Polymerschaumpartikel mit großem mittleren Partikeldurchmesser und möglichst enger Partikelgrößenverteilung. Für eine besonders hohe Wärmedämmung verwendet man zweckmäßig Polymerschaumpartikel mit höherer Dichte.

Aufgrund ihrer hohen Wärmedämmfähigkeit verwendet man besonders bevorzugt vorgeschäumte, expandierbare Styrolpolymerisate, die athermane Festkörper, wie Ruß, Aluminium oder Graphit, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Die Polymerschaumpartikel sind insbesondere mit Flammschutzmitteln ausgerüstet. Sie können hierzu beispielsweise 1 bis 6 Gew.-% einer organischen Bromverbindung, wie Hexabromcylcodecan (HBCD) und gegebenenfalls zusätzlich 0,1 bis 0,5 Gew.-% Dicumyl oder eines Peroxides enthalten.

Als wässrige Polymerdispersion eignen sich beispielsweise die in WO 03/106365 beschriebenen Polymerdispersionen. Bevorzugt werden Acrylat-Dispersionen, Styrol-Acrylat-Dispersion, Styrol-Butadien-Dispersionen und Vinylacetat-Dispersionen eingesetzt.

Des weiteren eignen sich Polyurethan-Dispersionen, wie sie beispielsweise in DE-A 19 708 451 beschrieben sind. Diese können durch Herstellung von Präpolymeren aus monomeren oder polymeren Diolen, beispielsweise Polyesterdiolen, Polycarbonatdiolen oder Polyetherdiolen wie Polytetrahydrofuran mit Isocyanaten, insbesondere Hexamethylendiisocyanat (HDI), Dicyclohexylmethandiisocyanat (HMDI), Isophorondiamin (IPDA) oder Isophorondiisocyanat (IPDI) erhalten werden. Anschließend kann die Dispersion nach Neutralisation, beispielsweise mit einem Amin oder Natriumhydroxid und anschließender Wasserzugabe hergestellt werden.

Als Koagulationsmittel eignen sich unter anderem Salze einwertiger oder mehrwertiger Kationen, wie Kalziumnitrat, Kalziumchlorid, Aluminiumsulfat, Magnesiumnitrat oder Zinknitrat, die bevorzugt eine gute Wasserlöslichkeit aufweisen, sowie Bronstedtsäuren, insbesondere starke Säuren wie Ameisensäure, Essigsäure, Zitronensäure oder Milchsäure. Auch Gemische solcher Koagulationsmittel kommen in Betracht. Bei dem erfindungsgemäßen Verfahren werden bevorzugt auf 100 Gew.-Teile Schaumstoffpartikel 0,1 bis 10 Gew.-Teile, insbesondere 1 bis 5 Gew.-Teile der wässrigen Polymerdispersion, bezogen auf Festkörper, eingesetzt. Der Feststoffgehalt der wässrigen Polymerdispersion beträgt in der Regel 30 bis 80 Gew.-%, insbesondere 45 bis 75 Gew.%.

Erfindungsgemäß werden die Schaumstoffpartikel in den Hohlraum gefüllt und mit der wässrigen Polymerdispersion verklebt. Durch die Zugabe des Koagulationsmittels erfolgt ein schnelles Abbinden nach dem Befüllen des Hohlraumes.

Zur Vereinfachung des Befüllens des Hohlraumes in Stufe b) werden die Schaumstoffpartikel in der Stufe a) zuvor mit Wasser, einer wässrigen Lösung oder wässrigen Dispersion benetzt. Hierfür kann, muss aber nicht die wässrige Polymerdispersion verwendet werden.

Erfindungsgemäß erfolgt die Koagulation der wässrigen Polymerdispersion mit einem Koagulationsmittel in dem mit Schaumpartikeln befüllten Hohlraum in Stufe c). Hierbei kann die wässrige Polymerdispersion und das Koagulationsmittel gleichzeitig in den mit den Schaumstoffpartikeln befüllten Hohlraum eingetragen werden. Dies hat den Vorteil, dass eine schnelle Filmbildung an der Oberseite des Hohlraumes, beispielsweise eines Hohlblocksteines, erfolgt und die Schüttung schnell verfestigt.

Alternativ ist es auch möglich, die wässrige Dispersion in Stufe a) unter gleichzeitiger Benetzung der Schaumstoffpartikel oder in Stufe c) zuzugeben, und anschließend die Koagutation durch Aufsprühen einer wässrigen Lösung des Koagulationsmittels zu bewirken.

Das erfindungsgemäße Verfahren eignet sich insbesondere zum Befüllen von Kammern in Hohlblocksteinen mit Schaumpartikeln. Als Hohlblocksteine können beispielsweise solche aus Ton mit einer oder mehreren Hohlkammern eingesetzt werden. Des weiteren eignen sich Hohlblocksteine aus Leichtbeton, die zur Reduzierung der Dichte des Bauelementes beispielsweise aus einer wässrigen Zementmörtel-Mischung und einem Leichtzuschlagstoff, beispielsweise Bims, Hüttenbims, Perlit, Blähton, Blähglas oder Blähschiefer bestehen und wie in WO 03/106365 beschrieben, hergestellt werden können.

## Patentansprüche

1. Verfahren zum Verfüllen von Hohlräumen von Hohlblocksteinen mit Schaumstoffpartikeln, umfassend die Stufen
a) Benetzen der Schaumstoffpartikel mit Wasser, einer wässrigen Lösung oder wässrigen Dispersion,
b) Befüllen des Hohlraumes mit den benetzten Schaumstoffpartikeln,
c) Koagulieren einer wässrigen Polymerdispersion durch Aufsprühen einer wässrigen Lösung eines Koagulationsmittels in dem mit Schaumstoffpartikein befüllten Hohlraum.

2. Verfahren nach Anspruch 1, **dadurch gekennzeichnet, dass** die wässrige Polymerdispersion in Stufe a) auf die Schaumstoffpartikel appliziert und das Koagulationsmittel in Stufe c) in den mit Schaumstoffpartikel befüllten Hohlraum gegeben wird.

3. Verfahren nach Anspruch 1 oder 2, **dadurch gekennzeichnet, dass** das Koagulationsmittel und zumindest ein Teil der wässrigen Polymerdispersion nach Stufe b) zugegeben wird.

4. Verfahren nach einem der Ansprüche 1 bis 3, **dadurch gekennzeichnet, dass** die Schaumstoffpartikel einen mittleren Partikeldurchmesser im Bereich von 2 bis 10 mm aufweisen.

5. Verfahren nach einem der Ansprüche 1 bis 4, **dadurch gekennzeichnet, dass** als Schaumstoffpartikel vorgeschäumtes, expandierbares Polystyrol (EPS) oder expandiertes Polypropylen (EPP) eingesetzt wird.

6. Verfahren nach einem der Ansprüche 1 bis 5, **dadurch gekennzeichnet, dass** als Polymerdispersion eine Polyurethan(PU)- oder Acrylatdispersion eingesetzt wird.

7. Verfahren nach einem der Ansprüche 1 bis 6, **dadurch gekennzeichnet, dass** als Koagulationsmittel eine wässrige Lösung von Ameisensäure, Essigsäure, Zitronensäure oder eines Erdalkali-, Aluminium oder Zinksalzes eingesetzt wird.

8. Verfahren nach einem der Ansprüche 1 bis 7, **dadurch gekennzeichnet, dass** auf 100 Gewichtsteile Schaumstoffpartikel 0,1 bis 10 Gewichtsteile, bezogen auf Festkörper, der wässrigen Polymerdispersion eingesetzt wird.

## Claims

1. A process for the filling of cavities of hollow masonry blocks with foam beads, comprising the following stages:
a) wetting of the foam beads with water or with an aqueous solution or aqueous dispersion,
b) filling of the cavity with the wetted foam beads,
c) coagulation of an aqueous polymer dispersion via spray-application of an aqueous solution of a coagulant in the cavity filled with foam beads.

2. The process according to claim 1, wherein the aqueous polymer dispersion in stage a) is applied to the foam beads and the coagulant in stage c) is added to the cavity filled with foam beads.

3. The process according to claim 1 or 2, wherein the coagulant and at least a portion of the aqueous polymer dispersion are added after stage b).

4. The process according to any of claims 1 to 3, wherein the average diameter of the foam beads is in the range from 2 to 10 mm.

5. The process according to any of claims 1 to 4, wherein the foam beads used comprise prefoamed, expandable polystyrene (EPS) or expanded polypropylene (EPP).

6. The process according to any of claims 1 to 5, wherein the polymer dispersion used comprises a polyurethane (PU) dispersion or acrylate dispersion.

7. The process according to any of claims 1 to 6, wherein the coagulant used comprises an aqueous solution of formic acid, of acetic acid, or of citric acid, or of an alkaline earth metal salt, aluminum salt, or zinc salt.

8. The process according to any of claims 1 to 7, wherein from 0.1 to 10 parts by weight, based on solids, of the aqueous polymer dispersion are used for every 100 parts by weight of foam beads.

## Revendications

1. Procédé pour le remplissage de cavités avec des particules de mousse, comprenant les étapes
a) mouillage des particules de mousse avec de l'eau, une solution aqueuse ou une dispersion aqueuse,
b) remplissage de la cavité avec les particules de mousses mouillées,
c) coagulation d'une dispersion aqueuse de polymère par pulvérisation d'une solution aqueuse d'un agent de coagulation dans la cavité remplie de particules de mousse.

2. Procédé selon la revendication 1, **caractérisé en ce que** la dispersion aqueuse de polymère dans l'étape a) est appliquée sur les particules de mousse et l'agent de coagulation dans l'étape c) est introduit dans la cavité remplie de particules de mousse.

3. Procédé selon la revendication 1 ou 2, **caractérisé en ce qu'**après l'étape b) on ajoute l'agent de coagulation et au moins une partie de la dispersion aqueuse de polymère.

4. Procédé selon l'une quelconque des revendications 1 à 3, **caractérisé en ce que** les particules de mousse ont un diamètre moyen de particule dans la plage de 2 à 10 mm.

5. Procédé selon l'une quelconque des revendications 1 à 4, **caractérisé en ce qu'**on utilise comme particules de mousse du polystyrène expansible (EPS) ou du polypropylène expansé (EPP).

6. Procédé selon l'une quelconque des revendications 1 à 5, **caractérisé en ce qu'**on utilise comme dispersion de polymère une dispersion de polyuréthanne (PU) ou d'acrylate.

7. Procédé selon l'une quelconque des revendications 1 à 6, **caractérisé en ce qu'**on utilise comme agent de coagulation une solution aqueuse d'acide formique, d'acide acétique, d'acide citrique ou d'un sel de métal alcalino-terreux, d'aluminium ou de zinc.

8. Procédé selon l'une quelconque des revendications 1 à 7, **caractérisé en ce qu'**on utilise pour 100 parties en poids de particules de mousse 0,1 à 10 parties en poids, sur la base de la matière solide, de la dispersion aqueuse de polymère.
